**Europäisches Patentamt**

**European Patent Office**

**Office européen des brevets**

(19)

(11) Veröffentlichungsnummer : **0 014 749
B1**

(12) **EUROPÄISCHE PATENTSCHRIFT**

(45) Veröffentlichungstag der Patentschrift :
22.09.82

(51) Int. Cl.³ : **H 04 M    1/04, B 60 R  11/02**

(21) Anmeldenummer : **79104754.1**

(22) Anmeldetag : **29.11.79**

(54) Halterung für ein an einer Wand lösbar befestigtes Gehäuse.

(30) Priorität : 24.02.79 DE 2907322

(43) Veröffentlichungstag der Anmeldung :
03.09.80 (Patentblatt 80/18)

(45) Bekanntmachung des Hinweises auf die Patenterteilung : 22.09.82 Patentblatt 82/38

(84) Benannte Vertragsstaaten :
AT BE DE FR GB IT LU NL SE

(56) Entgegenhaltungen :
DE U 1 969 489
DE U 7 714 471
US A 4 088 848
FUNKSCHAU, Band 48, Nr. 9, 23.
April 1976 München E. KOCH « UKW- und
UHF-Sprechfunkgeräte in Kompaktbauweise »

(73) Patentinhaber : ROBERT BOSCH GMBH
Postfach 50
D-7000 Stuttgart 1 (DE)

(72) Erfinder : Edel, Harry
Fahrenheitstrasse 27
D-1000 Berlin 45 (DE)
Erfinder : Lange, Wolfgang
Am Hüllepfuhl 14
D-1000 Berlin 20 (DE)

(74) Vertreter : Schmidt, Hans-Ekhardt
Robert Bosch GmbH Geschäftsbereich Elektronik
Patent- und Lizenzabteilung Forckenbeckstrasse
9-13
D-1000 Berlin 33 (DE)

# Halterung für ein an einer Wand lösbar befestigtes Gehäuse

## Stand der Technik

Die Erfindung geht aus von einer Halterung nach der Gattung des Hauptanspruchs, wie dies z.B. aus der DE-U-7 714 471 bekannt ist.

Es sind auch Halterungen für Mikrofone bekannt (Funkschau, 1976, Heft 9, Seite 351), die aus einer an einer Wand eines Kraftfahrzeuges, vorzugsweise am Armaturenbrett, befestigten federnden Klammer bestehen, in die das, zum Beispiel zylindrische, Mikrofongehäuse einschnappbar ist.

Diese und ähnliche Halterungen halten jedoch gewöhnlich größeren Rüttelbeanspruchungen nicht stand. Außerdem ist das Einführen des Mikrofons in die Halterung mit Schwierigkeiten verbunden, insbesondere dann, wenn das Fahrzeug mit höherer Geschwindigkeit fährt.

## Vorteile der Erfindung

Die erfindungsgemäße Halterung mit den kennzeichnenden Merkmalen des Hauptanspruchs hat den Vorteil, daß sich eine rüttelfeste Verbindung zwischen der Wand und dem Gerätegehäuse ergibt, und zwar sowohl in horizontaler und vertikaler Richtung als auch rechtwinklig zur Befestigungsebene.

Als weiterer Vorteil ist anzusehen, daß das Anbringen des Gehäuses an der Wand durch einfache Handgriffe ermöglicht wird, nämlich durch ein Einhängen und nachfolgendes Andrücken des Gehäuses.

Durch die in den Unteransprüchen aufgeführten Maßnahmen sind vorteilhafte Weiterbildungen und Verbesserungen der im Hauptanspruch angegebenen Halterung möglich.

Besonders vorteilhaft ist es, wenn der Sockel zu beiden Seiten je einen etwa L-förmigen, federnden Flansch aufweist und wenn die Flansche eine mit ihren Schenkeln von der Wand wegweisende U-förmige Führung bilden, die einen Teil der entsprechend geformten Rückwand des Gehäuses umgreift.

Dadurch erhält man für das an der Wand zu befestigende Gehäuse eine Führung, die durch ihre federnde Ausbildung auch für Gehäuse etwas unterschiedlicher Abmessungen wirksam ist.

## Zeichnung

Ein Ausführungsbeispiel der Erfindung ist in der Zeichnung an Hand mehrerer Figuren dargestellt und in der nachfolgenden Beschreibung näher erläutert. Die Zeichnung zeigt in

Figur 1 eine perspektivische Ansicht des an einer Wand befestigten erfindungsgemäßen Halteteils,

Figur 2 eine Seitenansicht eines Gehäuses mit an der Rückseite des Gehäuses vorgesehenen erfindungsgemäßen Halteelementen und

Figur 3 einen Querschnitt durch das Halteteil und das an diesem zu befestigende Gehäuse.

## Beschreibung der Erfindung

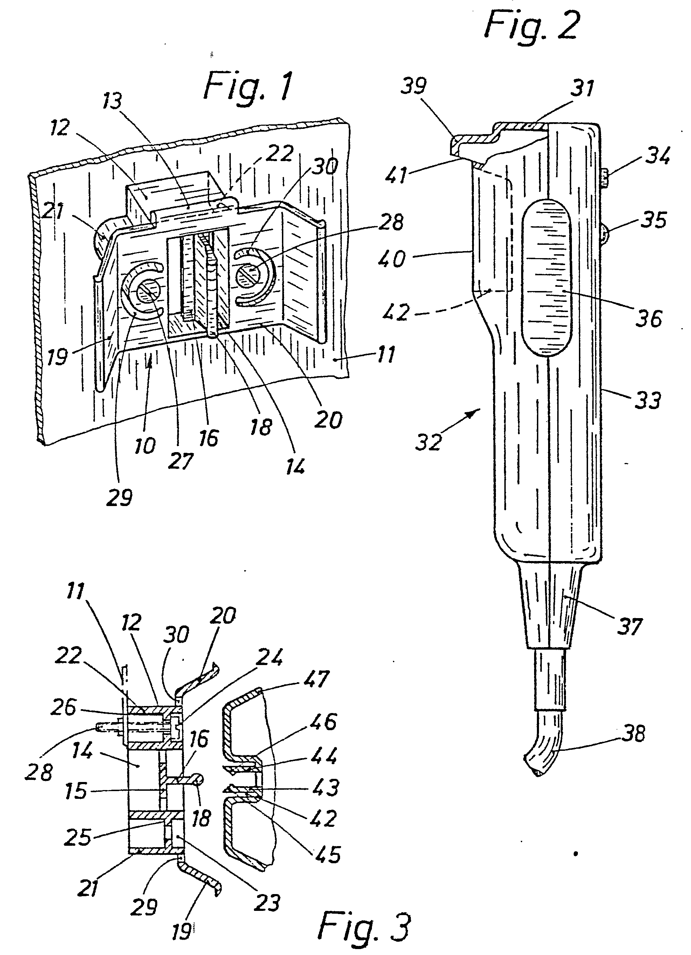

Ein in Fig. 1 dargestelltes erfindungsgemäßes Halteteil 10 ist an einer vertikalen Wand 11, zum Beispiel an einem Armaturenbrett eines Kraftfahrzeugs, befestigt. Das Halteteil weist einen im wesentlichen quaderförmigen Sockel 12 mit einer parallel zu seiner oberen vorderen Stirnkante liegenden leistenförmigen Zunge 13 auf. Der Sockel ist als aus Kunststoff gespritzter oder gepreßter Hohlkörper ausgebildet, der eine rechteckige Öffnung 14 (vgl. auch Fig. 3) enthält. In der Öffnung 14 ist eine parallel zu der Wand 11 verlaufende Trennwand 15 vorgesehen, die als Träger für ein längliches, leistenförmiges Rastelement 16 dient. Das Rastelement trägt an seinem freien Ende einen Wulstrand 18. Zunge 13 und Rastelement 16 stehen rechtwinklig zueinander. Die der Wand 11 abgewandte Vorderseite des Sockels 12 geht in zwei etwa L-förmige, federnde Flansche 19, 20 über, die zusammen eine etwa U-förmige Führung bilden.

Zum Befestigen des Sockels 12 auf der Wand 11 trägt der Sockel zwei, zum Beispiel zylindrische, Ansätze 21, 22 mit Öffnungen 23, 24, die je einen ringförmigen Flansch 25, 26 aufweisen, durch den der Schaft je einer Schraube 27, 28 hindurchtritt und an dem sich der Kopf der Schaube abstützt.

Damit die Flansche 19, 20 gut federn können, sind sie um die Ansätze 22, 23 herum mit je einem halbkreisförmigen Ausschnitt 29, 30 versehen.

Ein im wesentlichen quaderförmiges Gehäuse 31 (Fig. 2) eines Handbedienteils 32 für ein Kraftfahrzeugsprechfunkgerät weist an seiner Frontseite 33 Bedienungselemente 34 und Anzeigeelemente 35, an einer Seitenwand eine Sendetaste 36 und an seinem unteren Ende eine Kabeleinführung 37 für ein Anschlußkabel 38 auf.

Durch einen Gehäusevorsprung 39 am oberen Ende der Rückwand 40 des Gehäuses 31 wird ein länglicher Schlitz 41 gebildet, mit dem das Gehäuse auf die Zunge 13 des Halteteils 10 gehängt werden kann. In der Rückwand 40 des Gehäuses ist weiterhin eine längliche, parallel zur Längssymmetrieachse des Gehäuses verlaufende Vertiefung 42 (vgl. Fig. 2 und 3) enthalten, aus deren Boden zwei in einem geringen Abstand parallel zueinander liegende, mit ihren freien Enden zueinander federnde Leisten 43, 44 hervortreten. Die Leisten gehen an ihren freien Enden in je eine im Querschnitt dreieckförmige oder halbrunde Verdickung 45, 46 über.

Im Bereich der Vertiefung 42 ist das Gehäuse 31 des Handbedienteils 32 dachförmig ausgebildet, wobei die Dachschrägen etwa den gleichen Winkel einschließen wie die federnden Flansche 19, 20 des Halteteils 10.

Zur Wirkungsweise der vorstehend beschriebenen Halterung ist folgendes zu sagen.

Soll das Handbedienteil 32 an der Wand 11 befestigt werden, so wird es zunächst in Richtung auf das Halteteil 10 bewegt, wobei die federnden Flansche 19, 20 als Führung dienen.

Dadurch ist es verhältnismäßig leicht, das Gehäuse 31 mit seinem Schlitz 41 auf die Zunge 13 des Halteteils 10 zu hängen. Durch eine Druckausübung auf das untere Ende der Frontseite 33 des Handbedienteils wird die Rastverbindung zwischen dem Rastelement 16 des Halteteils 10 und dem Rastelement aus den beiden Leisten 43, 44 des Handbedienteils hergestellt. Dabei schnappen die Verdickungen 45, 46 der federnden Leisten 43, 44 über den Wulstrand 18 des Rastelements 16.

In dieser Lage ist das Handbedienteil rüttelsicher an der Wand 11 befestigt. Soll das Handbedienteil wieder abgenommen werden, so wird das untere Ende des Gehäuses etwas von der Wand 11 abgehoben, so daß sich die Rastverbindung zwischen dem Rastelement 16 und den beiden Leisten 43, 44 löst ; dann kann das Handbedienteil von der Zunge 13 nach oben abgehoben werden.

Der Sockel 12 wird im übrigen vorteilhafterweise derart ausgebildet, daß er oben eine kleinere Höhe hat als unten. Dadurch nimmt das an dem Halteteil befestigte Handbedienteil eine mit seinem unteren Ende einen etwas größeren Abstand von der Wand aufweisende geneigte Stellung ein. Auf diese Weise kann das Handbedienteil von dem Bedienenden leicht ergriffen werden, und zwar in einer Lage, die für die sachgemäße Benutzung des Handbedienteils geeignet ist.

## Ansprüche

1. Halterung für ein an einer Wand (11) lösbar befestigtes Gehäuse (31) für ein Handbedienteil eines Sprechfunkgerätes oder dergl., insbesondere für Kraftfahrzeuge, mit einem an der Wand fest angeordneten Halteteil (10), das aus einem Sockel (12) mit einer an seiner Oberseite horizontal angeordneten Zunge (13) besteht, und wobei das Gehäuse (31) als Aufhänge-Halteelement einen auf die Zunge passenden Schlitz (41) in der Gehäusewand aufweist, dadurch gekennzeichnet, daß das Halteteil (10) ein vertikal angeordnetes erstes längliches Rastelement (16) und die Gehäusewand ein zweites längliches Rastelement (43, 44) aufweist, das bei auf die Zunge (13) gehängtem und gegen das Halteteil gepreßtem Gehäuse (31) mit dem ersten Rastelement kraft- und formschlüssig in Eingriff kommt.

2. Halterung nach Anspruch 1, dadurch gekennzeichnet, daß das erste längliche Rastelement (16) aus einem leistenförmigen Teil mit einem Wulstrand (18) an seiner vorderen Kante und das zweite längliche Rastelement aus zwei mit ihren freien Enden zueinander federnden Leisten (43, 44) besteht, die an ihren vorderen Kanten je eine Verdickung (45, 46) aufweisen.

3. Halterung nach Anspruch 1 oder 2, dadurch gekennzeichnet, daß der Sockel (12) zu beiden Seiten je einen etwa L-förmigen, federnden Flansch (19, 20) aufweist und daß die Flansche eine mit ihren Schenkeln von der Wand wegweisende U-förmige Führung bilden, die einen Teil der entsprechend geformten Rückwand (40) des Gehäuses (31) umgreift.

4. Halterung nach Anspruch 1, dadurch gekennzeichnet, daß der Schlitz (41) des Gehäuses (31) durch einen Gehäusevorsprung (39) an der Rückwand (40) gebildet ist.

5. Halterung nach Anspruch 1 oder 2, dadurch gekennzeichnet, daß die federnden Leisten (43, 44) in einer länglichen Vertiefung (42) der Rückwand (40) des Gehäuses (31) vorgesehen sind.

## Claims

1. Retaining device for a housing (31) detachably mounted on a wall (11) for a handset of a radio telephone or the like, particularly for motor vehicles, having a retaining part (10) which is fixedly disposed on the wall and which comprises a socket (12) having a tongue (13) disposed horizontally on the top side thereof, and the housing (31) having in the wall thereof a slot (41) which fits onto the tongue and serves as a suspension and retaining element, characterised in that the retaining part (10) has a vertically disposed, first elongate latching element (16), and the housing wall has a second elongate latching element (43, 44) which engages the first latching element in a frictional and positive manner when the housing (31) is attached to the tongue (13) and is pressed against the retaining part.

2. A retaining device as claimed in claim 1, characterised in that the first elongate latching element (16) comprises a strip-shaped part having a beaded front edge (18), and the second elongate latching element comprises two strips (43, 44) whose free ends are resilient relative to one another and whose front edges are each provided with a respective thickened portion (45, 46).

3. A retaining device as claimed in claim 1 or 2, characterised in that each side of the socket (12) has a respective, substantially L-shaped resilient flange (19, 20), and in that the limbs of the flanges form a U-shaped guide which is directed away from the wall and which embraces a portion of the correspondingly shaped rear wall (40) of the housing (31).

4. A retaining device as claimed in claim 1, characterised in that the slot (41) in the housing (31) is formed by a housing projection (39) on the rear wall (40).

5. A retaining device as claimed in claim 1 or 2, characterised in that the resilient strips (43, 44) are provided in an elongate recess (42) in the rear wall (40) of the housing (31).

## Revendications

1. Fixation pour un coffret (31) fixé, de façon amovible, sur une paroi.(11) pour un élément de service manuel d'appareil radio-téléphonique, notamment pour véhicules automobiles ou similaires, avec un élément de maintien (10) disposé à poste fixe sur la paroi, qui est constitué par un socle (12) avec une languette (13) disposée horizontalement sur sa face supérieure, le coffret (31) comportant, en tant qu'élément de retenue en suspension, une fente (41) dans la paroi du coffret s'adaptant à la languette, caractérisé en ce que l'élément de maintien (10) comporte un premier élément d'enclenchement allongé.(16), disposé verticalement et la paroi du coffret un second élément d'enclenchement allongé (43, 44) qui, lorsque le coffret (31) est suspendu sur la languette (13) et est appliqué contre l'élément de maintien, vient en prise par force et par forme avec le premier élément d'enclenchement.

2. Fixation selon la revendication 1, caractérisée en ce que le premier élément d'enclenchement allongé (16) est constitué par une partie en forme de nervure avec un bourrelet de bordure (18) sur son bord avant et le second élément d'enclenchement allongé est constitué par deux nervures (43, 44) jouant élastiquement l'une par rapport à l'autre par leurs extrémités libres, qui présentent respectivement un épaississement (45, 46) sur leurs bords avant.

3. Fixation selon l'une quelconque des revendications 1 à 2, caractérisée en ce que le socle (12) comporte, sur chacun des deux côtés, un rebord élastique (20) sensiblement en forme de L, et en ce que les rebords constituent un guidage en forme de V dont les branches s'écartent de la paroi, guidage qui vient en prise autour d'une partie de forme correspondante de la paroi arrière (40) du boitier (31).

4. Fixation selon la revendication 1, caractérisée en ce que la fente (41) du coffret (31) est formée par une saillie (39) du coffret sur la paroi arrière (40).

5. Fixation selon l'une quelconque des revendications 1 ou 2, caractérisée en ce que les nervures élastiques (43, 44) sont prévues dans un renfoncement allongé (42) de la paroi arrière (40) du coffret (31).

Fig. 1

Fig. 2

Fig. 3